# EUROPÄISCHE PATENTANMELDUNG

(11) **EP 1 786 041 A2**
(43) Veröffentlichungstag der Anmeldung: **16.05.2007**
(21) Anmeldenummer: 06014826.9
(22) Anmeldetag: 17.07.2006
(51) Int. Cl.: H01L 31/042

(54) **Halteelement für Photovoltaikmodule**

(30) Priorität: 11.11.2005 DE 102005054315
(71) Anmelder: Kirschning, Christian, 40477 Düsseldorf (DE)
(72) Erfinder: Kirschning, Christian, 40477 Düsseldorf (DE)
(74) Vertreter: Cohausz, Helge B.

(57) **Zusammenfassung**

Die Erfindung betrifft ein Haltelement für Photovoltaikmodule, um wenigstens ein Photovoltaikmodul an einer Befestigungsvorrichtung zu befestigen, wobei das Halteelement wenigstens einen Aufnahmebereich (5) aufweist, um einen Rand wenigstens eines Photovoltaikmoduls (3) zu fassen, wobei wenigstens ein Anschlusselement (6) in oder benachbart zu einem Aufnahmebereich (5) angeordnet ist, das sich bei einem Einschieben und/oder Einstecken eines Photovoltaikmoduls (3) an/in dem Halteelement (1) mit wenigstens einem an einem Photovoltaikmodul (3) angeordneten Anschlusselement (7) elektrisch verbindet. Die Erfindung betrifft weiterhin ein Photovoltaikmodul, mit wenigstens einem elektrischen Anschlusselement, wobei sich das wenigstens eine Anschlusselement (7) bei einem Einschieben und/oder Einstecken des Photovoltaikmoduls (3) an/in einen Aufnahmebereich (5) eines Halteelements (1) mit wenigstens einem in oder benachbart zu dem Aufnahmebereich (5) angeordneten Anschlusselement (6) elektrisch verbindet. Die Erfindung betrifft weiterhin ein System umfassend wenigstens ein Halteelement und wenigstens ein Photovoltaikmodul sowie auch ein Verfahren zur elektrischen Kontaktierung wenigstens eines Photovoltaikmodul mit einem Halteelement, bei dem wenigstens ein Photovoltaikmodul (3) in wenigstens einen Aufnahmebereich (5) wenigstens eines Halteelements (1) eingeschoben und/oder eingesteckt wird, wodurch automatisch eine elektrische und mechanische Verbindung zwischen wenigstens einem Anschlusselement (7) des Photovoltaikmoduls (3) und wenigstens einem in/an oder benachbart zum Aufnahmebereich (5) angeordneten Anschlusselement (6) des wenigstens einen Halteelements (1) entsteht.

## Beschreibung

Die Erfindung betrifft ein Halteelement für Photovoltaikmodule, um wenigstens ein Photovoltaikmodul an einer Haltevorrichtung zu befestigen. Die Erfindung betrifft weiterhin ein Photovoltaikmodul sowie ein System, umfassend wenigstens ein Halteelement und wenigstens ein Photovoltaikmodul sowie weiterhin auch ein Verfahren zur elektrischen Verbindung von Photovoltaikmodulen mit Halteelementen.

Als Photovoltaikmodule werden Vorrichtungen verstanden, mit denen aus dem Sonnenlicht elektrische Energie gewonnen werden kann. Hierbei sind Photovoltaikmodule oftmals als gerahmtes oder rahmenloses Glaslaminat aufgebaut, wobei an einem Photovoltaikmodul ein elektrischer Anschluss angeordnet ist, um die erzeugte Spannung und/oder Leistung an einem jeweiligen Modul abzugreifen. Oftmals werden Photovoltaikmodule an sonnenbevorzugten Orten montiert, wofür entsprechende Befestigungsvorrichtungen vorgesehen sein können.

Eine Befestigungsvorrichtung kann beispielsweise an einem Dach oder einer Wand eines Hauses angeordnet sein oder aber es werden separate, z.B. auf einem freien Feld stehende Befestigungsvorrichtungen verwendet, um ein- oder mehrere Photovoltaikmodule einer Sonneneinstrahlung oder anderen Lichtquellen auszusetzen. Hierbei ist es beispielsweise auch bekannt, eine Befestigungsvorrichtung derart auszustatten, dass die daran befestigten Photovoltaikmodule der Sonne oder einer anderen Lichtquelle nachgeführt werden.

Um Photovoltaikmodule an einer Befestigungsvorrichtung zu befestigen, ist es weiterhin bekannt, Halteelemente einzusetzen, mit denen ein Photovoltaikmodul gefasst werden kann, um eine Verbindung zwischen Photovoltaikmodul und Befestigungsvorrichtung zu erreichen.

Je nach Anwendungsfall werden Photovoltaikmodule in Reihe oder auch parallel geschaltet. Hierfür weisen Photovoltaikmodule wie vorgenannt üblicherweise einen elektrischen Anschluss in Form von an dem Photovoltaikmodul angeordneten Kabeln auf, die nach einer Befestigung der Module in/an einem Halteelement einer Befestigungsvorrichtung üblicherweise freihängend verkabelt werden, um den elektrischen Anschluss der Photovoltaikmodule untereinander zu gewährleisten. Diese sodann üblicherweise freihängenden Kabel sind bei einer derartigen Montage Wind und Wetter ausgesetzt und stellen demnach ein anfälliges Element eines Photovoltaikmoduls dar.

Aufgabe der Erfindung ist es, Halteelemente bzw. Photovoltaikmodule bzw. ein System aus solchen und ein Verfahren zur elektrischen Verbindung von Photovoltaikmodulen bereit zu stellen, welches eine problemlose, einfache, wartungsarme und zuverlässige Möglichkeit bereitstellt, Photovoltaikmodule elektrisch zu kontaktieren, insbesondere untereinander elektrisch zu verbinden und hierbei auch mechanisch zu halten.

Diese Aufgabe wird erfindungsgemäß durch ein Halteelement gelöst, welches wenigstens einen Aufnahmebereich aufweist, um einen Rand wenigstens eines Photovoltaikmoduls zu fassen, wobei wenigstens ein Anschlusselement in oder benachbart zu einem Aufnahmebereich angeordnet ist. Hierdurch wird gewährleistet, dass sich das wenigstens eine Anschlusselement bei einem Einschieben und/oder Einstecken eines Photovoltaikmoduls an/in dem Halteelement mit wenigstens einem an einem Photovoltaikmodul angeordneten Anschlusselement elektrisch verbindet.

Gemäß einem weiteren Aspekt der Erfindung wird die Aufgabe gelöst durch ein Photovoltaikmodul mit wenigstens einem elektrischen Anschlusselement, wobei sich das wenigstens eine Anschlusselement bei einem Einschieben und/oder Einstecken des Photovoltaikmoduls an/in einen Aufnahmebereich eines Halteelements mit wenigstens einem in oder benachbart zu dem Aufnahmebereich angeordneten Anschlusselement elektrisch verbindet.

Gemäß einem weiteren Aspekt der Erfindung wird die Aufgabe gelöst durch ein Verfahren bei dem wenigstens ein Photovoltaikmodul in wenigstens einen Aufnahmebereich wenigstens eines Halteelements eingeschoben und/oder eingesteckt wird, wodurch automatisch eine elektrische und mechanische Verbindung zwischen wenigstens einem Anschlusselement des Photovoltaikmoduls und wenigstens einem in/an oder benachbart zum Aufnahmebereich angeordneten Anschlusselement des wenigstens einen Halteelements entsteht.

Der wesentliche erfindungsgemäße Gedanke ist es demnach, dass sowohl ein Halteelement als auch ein Photovoltaikmodul zueinander korrespondierende Anschlusselemente aufweisen, z.B. Stecker und Buchse/n, wobei es für die Erfindung irrelevant ist, an welchem Element Stecker bzw. Buchse/n angeordnet ist/sind, so dass gemäß der Erfindung für eine einfache und insbesondere zuverlässige elektrische Verbindung, insbesondere von mehreren Photovoltaikmodulen miteinander, die Photovoltaikmodule in Halteelemente eingesteckt oder eingeschoben werden, wodurch automatisch eine elektrische und auch eine mechanische Verbindung zwischen einem Photovoltaikmodul und einem Halteelement entsteht, insbesondere wobei bei mehreren Photovoltaikmodulen eine elektrische Verbindung wenigstens eines Teils der Photovoltaikmodule, gegebenenfalls aller Photovoltaikmodule untereinander entsteht.

Ein erfindungsgemäßes Halteelement sorgt somit neben einer sicheren mechanischen Befestigung in dem dafür vorgesehenen Aufnahmenbereich auch für eine sichere elektrische Kontaktierung durch das wenigstens eine Anschlusselement welches in oder benachbart zu diesem Aufnahmebereich angeordnet ist.

Hierbei kann es auch vorgesehen sein, dass eine mechanische Verbindung zwischen Modul und Halteelement auch durch die Anschlusselemente erfolgen kann, welche für die elektrische Verbindung vorgesehen sind.

Aufgrund der direkten zumindest elektrischen ggfs. auch mechanischen Verbindung der jeweils vorgesehenen Anschlusselemente können Kabelverbindungen vollständig entfallen, so dass Umwelteinflüsse auf die Anschlusselemente im Wesentlichen vernachlässigbar bleiben. Insbesondere gibt es keine lose herumhängenden Anschlusskabel mehr, die durch Wind und Wetter fortlaufend bewegt und beispielsweise brüchig oder in sonstiger Form anfällig werden können. Insbesondere können die Anschlusselemente an Halteelement und Photovoltaikmodulen derart ausgebildet sein, dass diese nach einem Miteinanderverbinden, z.B. nach dem Einstecken des einen Anschlusselementes in ein anderes wasserdicht ausgebildet sind.

So können mit den erfindungsgemäßen Photovoltaikmodulen und den erfindungsgemäßen Halteelementen auf einfache Art und Weise Befestigungsvorrichtungen realisiert werden, an denen Photovoltaikmodule auf einfache Art und Weise mechanisch und auch elektrisch miteinander verbunden werden können. An diesen Befestigungsvorrichtungen können die erfindungsgemäßen Halteelemente befestigt sein, welche Photovoltaikmodule mechanisch halten und elektrisch kontaktieren.

So kann mittels eines erfindungsgemäßen Halteelementes bzw. einer Vielzahl erfindungsgemäßer Halteelemente eine größere Feldanordnung von Photovoltaikmodulen, d.h. einer Neben- und/oder Übereinanderanordnung von Photovoltaikmodulen erreicht werden. Hierzu bedarf es im Wesentlichen lediglich einer Unterkonstruktion, z.B. einer Befestigungsvorrichtung, mit welcher die einzelnen Halteelemente zueinander auf einem insbesondere festen, ggfs auch variablen Abstand gehalten werden, um die Photovoltaikmodule an den Halteelementen in einem entsprechenden Aufnahmebereich befestigen zu können.

Ein Halteelement kann hierbei hinsichtlich seiner konstruktiven Ausgestaltung, um ein mechanisches Halten zu erreichen, in üblicher Art und Weise ausgestaltet sein, beispielsweise, wie es im Stand der Technik bekannt ist. Wesentlich für den erfindungsgemäßen Gedanken ist hier die automatische elektrische Verbindung zwischen Halteelement und Photovoltaikmodul bei der Befestigung dieser Elemente miteinander, wobei erfindungsgemäß vorgesehen ist, dass die Anschlusselemente in oder benachbart zu einem Aufnahmebereich angeordnet sind, wodurch mechanischen Belastungen der elektrischen Anschlusselemente sehr gering gehalten werden können.

Gemäß einer vorteilhaften Ausgestaltung kann es beispielsweise vorgesehen sein, dass ein Halteelemente als ein Profil ausgebildet ist, um wenigstens ein Photovoltaikmodul an einer Längs- und/oder Breitseite zu fassen. In einer anderen Alternative kann es ebenso vorgesehen sein, dass ein Halteelement ausgebildet ist, um wenigstens ein Photovoltaikmodul an/in einem Eckbereich zu fassen.

Bei einer Ausbildung eines Halteelementes als ein Profil, welches ein Photovoltaikmodul an einer Längs- und/oder Breitseite fasst, werden beispielsweise zwei Halteelemente benötigt, die parallel zueinander angeordnet sind, um ein Photovoltaikmodul an parallel zueinander verlaufenden Seiten, hier insbesondere am Randbereich, zu fassen.

Bei einer Befestigung von Photovoltaikmodulen mit derartigen profilförmigen Halteelementen zum Fassen einer Längs- und/oder Breitseite ist es nicht zwingend erforderlich, dass jedes einzelne Halteelement gemäß dem erfindungsgemäßen Gedanken ausgestaltet ist, d.h. entsprechende Anschlusselemente, z.B. einen Stecker oder eine Buchse mit mehreren elektrischen Anschlüssen aufweist. Hier kann es vorgesehen sein, dass nur einige der Halteelemente zum Halten eines Photovoltaikmoduls zu einer elektrischen Verbindung beitragen.

Ist es beispielsweise vorgesehen, dass Photovoltaikmodule an einer Längs- bzw. Breitseite gehalten werden, so ist es ausreichend, dass nur in den Halteelementen auf einer der beiden Seiten die elektrische Verbindung zum jeweiligen Modul stattfindet und das gegenüberliegende Halteelement lediglich die mechanische Befestigung bildet.

Gemäß weiterer bevorzugter Ausführung kann es vorgesehen sein, dass mit einem Halteelement mehrere Photovoltaikmodule fassbar sind, wobei ein Halteelement mehrere Anschlusselemente aufweisen kann und jeweils wenigstens ein Anschlusselement einem zu fassenden Photovoltaikmodul zugeordnet ist. So können beispielsweise mit Bezug auf Halteelemente zum Fassen eines Photovoltaikmoduls an einer Seite bzw. an einem Randbereich mehrere Anschlusselemente des Halteelementes zueinander einen periodischen Abstand aufweisen, insbesondere wobei ein Abstand im Wesentlichen einer Breite und/oder Länge eines Photovoltaikmoduls entspricht, gegebenenfalls zuzüglich eines beabsichtigten Abstands zwischen den jeweiligen Photovoltaikmodulen. So können im Abstand dieser vorgesehenen Periodizität der Anschlusselemente demnach an einem solchen Halteelement mehrere Photovoltaikmodule sowohl mechanisch als auch elektrisch befestigt werden.

Bevorzugt gilt für die Ausführungen der erfindungsgemäßen Halteelemente bzw. Photovoltaikmodule, dass die hier genannten Anschlusselemente mehrere elektrische Kontaktelemente aufweisen, nämlich mindestens zwei, um positives und negatives Potential zu definieren. Gegebenenfalls kann es vorgesehen sein, vier Kontaktelemente bereitzustellen, nämlich zwei Kontaktelemente, die eine Verbindung eines Photovoltaikmoduls zu einem vorhergehenden Modul herstellen und zwei weitere Kontaktelemente, die eine elektrische Verbindung zu einem nachfolgenden Photovoltaikmodul herstellen.

Ebenso kann in einem Anschlusselement ggfs. nur ein elektrisches Kontaktelement vorgesehen sein. Dann gibt es an einem Halteelement bzw. Photovoltaikelement wenigstens zwei Anschlusselemente, eines für positives und eines für negatives Potential. Die Art der Kontaktierung bzw. elektrischen Verbindung hängt hierbei im Wesentlichen von der gewünschten elektrischen Leitungsführung beim Halteelement ab, die bevorzugt innerhalb des Halteelementes erfolgt.

In einer weiteren bevorzugten Ausgestaltung, insbesondere, wenn Halteelemente vorgesehen sind, um an einem seitlichen Randbereich eines Photovoltaikmoduls anzugreifen, kann es vorgesehen sein, dass mehrere Halteelemente miteinander, insbesondere steck- und lösbar verbindbar sind, insbesondere wobei die Anschlusselemente der Halteelemente miteinander elektrisch kontaktierbar sind, um ein längeres Halteelement zu bilden, in welchem mehrere Photovoltaikelemente befestigbar sind.

So kann es demnach vorgesehen sein, dass ein Halteelement je nach Befestigung mit der Breite bzw. der Länge eines daran zu befestigenden Photovoltaikmoduls übereinstimmt bzw. eine größere Länge aufweist, wobei es sodann für die Montage mehrerer Photovoltaikmodule neben und/oder übereinander vorgesehen ist, dass die Halteelemente untereinander verbunden werden, um ein entsprechend hieraus gebildetes längeres Halteelement auszubilden. Hierfür ist es nötig, auch die elektrische Verbindung von einem Halteelement zum anderen fortzuführen, wofür an den Verbindungsstellen der Halteelemente untereinander ebenfalls elektrische Anschlusselemente vorgesehen sein können. So kann eine Verbindung durch eine mechanische Steck- und/oder Schnappverbindung hergestellt werden, die gleichzeitig auch zur elektrischen Verbindung Sorge trägt.

Unabhängig davon, ob ein Halteelement jeweils wenigstens ein Anschlusselement aufweist, um ein einzelnes Photovoltaikmodul elektrisch zu kontaktieren oder aber mehrere Anschlusselemente, um mehrere Photovoltaikmodule zu kontaktieren, ist es wie vorangehend erwähnt bevorzugt vorgesehen, dass die elektrische Leitungsführung zwischen verschiedenen Anschlusselementen bevorzugt innerhalb eines Halteelementes bzw. mehrerer verbundenen Halteelementen vorgenommen wird.

In einer besonders bevorzugten Ausgestaltung, die mit sämtlichen anderen, zuvor genannten Konstruktionen kombinierbar ist, kann es vorgesehen sein, dass an einem Halteelement eine Schaltvorrichtung vorgesehen ist, mittels der bestimmbar ist, ob Photovoltaikmodule vermittels des Halteelementes elektrisch in Reihe oder parallel geschaltet sind. Mit einem derartigen Halteelement kann demnach bestimmt werden, ob in einem z.B. größeren Feld von mehreren Photovoltaikmodulen diese Module alle in Reihe oder parallel geschaltet sind bzw. Feldbereiche parallel und in Reihe geschaltet sind. Ebenso besteht so die Möglichkeit, einen ersten Feldbereich, in dem sämtliche Photovoltaikmodule in Reihe geschaltet sind, mit einem zweiten Feldbereich, in dem ebenfalls alle Photovoltaikmodule in Reihe geschaltet sind, untereinander wiederum parallel zu schalten.

Erfindungsgemäße Halteelemente zeichnen sich dadurch aus, dass sie wenigstens einen Aufnahmebereich aufweisen, um einen Randbereich wenigstens eines Photovoltaikmoduls zu fassen. Hierbei kann es vorgesehen sein, dass der Randbereich eines Photovoltaikmoduls gefasst oder umfasst wird, wenn eine Relativbewegung zwischen Halteelement und Photovoltaikmodul stattfindet, insbesondere in bzw. parallel zur Ebene des Photovoltaikmoduls. Dies kann insbesondere derart erfolgen, dass ein Halteelement parallel zu einem Rand eines Photovoltaikmoduls angeordnet ist und das Halteelement senkrecht zu seiner Längserstreckung bzw. senkrecht zum Rand des Photovoltaikmoduls bewegbar ist.

Bei einer solchen Ausgestaltung kann es vorteilhaft sein, wenn ein erfindungsgemäßes Halteelement relativ zu einem anderen Halteteil in einem Abstand und beweglich angeordnet ist. So kann durch eine relative Bewegung zwischen Halteelement und Halteteil ein Photovoltaikmodul zwischen diesen eingefasst werden und somit mechanisch befestigt und elektrisch kontaktiert werden. Eine solche relative Bewegung kann dabei bevorzugt senkrecht zur Längserstreckung von Halteelement und Halteteil erfolgen. Die bevorzugt parallel zueinander angeordnet sind. Es kann hierbei auch vorgesehen sein, dass auch das Halteteil als erfindungsgemäßes Halteelement ausgebildet ist.

Erreicht werden kann dies z.B. dadurch, dass das Halteelement mittels einer Befestigungsvorrichtung oder Aufständerung in einem Abstand, insbesondere parallel zu einem Halteteil angeordnet ist, wobei wenigstens das Halteelement oder wenigstens das Halteteil verschieblich ausgebildet ist, so dass der Abstand zwischen diesen veränderbar ist.

Bei einer solchen Konstruktion kann auch nachträglich eine leichte Entfernung eines Photovoltaikmoduls aus der Befestigungsvorrichtung / Aufständerung erfolgen, z.B. dadurch, dass das Halteelement und/oder Halteteil verschoben wird, wodurch sich der Abstand vergrößert, die elektrische Kontaktierung aufgehoben wird und das Modul entnommen werden kann.

Ein Aufnahmebereich eines erfindungsgemäßen Halteelementes, aber auch eines vorgenannten Halteteiles ohne die elektrische Kontaktierung kann z.B. ausgebildet sein durch zwei zueinander beabstandete Wandbereiche / Wände, deren Abstand im Wesentlichen der Dicke eines Photovoltaikmoduls bzw. dessen Rand entspricht. Gegebenenfalls kann hier berücksichtigt sein, dass in einem Aufnahmebereich ein elastomeres Element, z.B. aus Gummi, aufgenommen ist, um ein Photovoltaikmodul mittels des Gummielementes und nicht direkt mit dem Halteelement zu fassen.

Ein Aufnahmebereich kann beispielsweise ausgebildet sein als eine Nut, die geeignet ist, einen Randbereich eines Photovoltaikmoduls zu umfassen. Erfindungsgemäß ist es dabei vorgesehen, dass wenigstens ein Anschlusselement, das gemäß den vorherigen Ausführungen ein, zwei oder mehr Kontaktelemente aufweisen kann, in oder benachbart zu einem Aufnahmebereich angeordnet ist.

Eine mögliche bevorzugte Ausführung wird darin gesehen, dass ein Aufnahmebereich als eine Nut ausgebildet ist, wobei parallel zur Nut ein Kabelkanal angeordnet ist, der über wenigstens eine Ausnehmung im Nut-Grund mit dem Nut-Inneren in Verbindung steht. Hierbei kann der Kabelkanal durch eine offene mit einem Deckelelement verschließbare Nut ausgebildet ist.

Diese Ausführung hat den Vorteil, dass eine besonders einfache Verkabelung stattfinden kann, z.B. dadurch, dass ein insbesondere vorkonfektionierter Kabelbaum oder ein Kabel in den offenen Kabelkanal eingelegt wird. Hierbei kann es vorgesehen sein, dass am Kabel/Kabelbaum wenigstens ein, bevorzugt ein Vielzahl von Anschlusselementen angeordnet sind, insbesondere die über Kabelstücke am Kabel/Kabelbaum angeordnet sind. Ein solches Anschlusselement kann sodann in eine Ausnehmung direkt oder über ein insbesondere elastomeres Zwischenstück eingesetzt werden, wodurch es insbesondere kraft-, form- oder stoffschlüssig in einer Ausnehmung befestigt sein kann. Hiernach kann der offene Kabelkanal mit dem Deckelelement verschlossen werden.

Die Ausnehmungen im Nutgrund weisen dabei bevorzugt einen Abstand auf, der dem Abstand der Anschlusselemente an den Photovoltaikmodulen entspricht, so dann in ein solches konfektioniertes Halteelement eine gewünschte Anzahl von Photovoltaikmodulen eingesetzt werden kann.

In einer anderen Ausführung kann es auch vorgesehen sein, dass eine Ausnehmung als ein Schlitz, insbesondere über die gesamte Länge der Nut und/oder des Kabelkanals, ausgebildet ist. Bei dieser Ausführung kann der Kabelkanal ohne zusätzliches Deckelelement ausgebildet sein, da in dieser Ausführung eine Bestückung des Kabelkanals mit einem Kabel und/oder einem Kabelbaum durch den Schlitz im Nutgrund erfolgen kann. Auch hier kann es sodann vorgesehen sein, dass Anschlusselemente des Kabels und/oder Kabelbaumes in den Schlitz eingesetzt werden können, insbesondere wobei ein nötiger Abstand markiert sein kann oder im Schlitz noch andere Ausnehmungen vorgesehen sind, in die die Anschlusselemente direkt oder je über ein insbesondere elastomeres Zwischenstück hineinsetzbar sind.

So kann hierdurch gewährleistet werden, dass das Anschlusselement in einer Ausnehmung elastisch gelagert ist, so dass Lagetoleranzen, Belastungen oder unterschiedliche Ausdehnungen zwischen Halteelement und Photovoltaikmodul ausgeglichen werden können. Alternativ oder auch kumulativ kann ein Kontaktelement in einem Anschlusselement elastisch gelagert sein.

In einer weiterhin möglichen Ausführung kann es vorgesehen sein, dass ein Halteelement zwei parallel verlaufende Nute aufweist, die zu entgegengesetzten Seiten geöffnet sind, insbesondere wobei zwischen den Nuten ein Kabelkanal angeordnet ist, der über wenigstens eine schlitzförmige Ausnehmung in einem Nut-Grund mit dem Inneren wenigstens einer der Nuten in Verbindung steht. Auch hier besteht wie oben beschrieben die Möglichkeit der Bestückung des Kabelkanals durch den Schlitz im Nutgrund wenigstens einer der beiden Nuten. Die Ausführung hat weiterhin den Vorteil, dass eine der Nuten zum Halten und Kontaktieren eines ersten Photovoltaikmoduls dient, wobei die zur anderen Seite offene Nut zum Halten und ggfs. auch zum Kontaktieren eines zweiten benachbarten Photovoltaikmoduls dient.

Ein entsprechend zu einem vorgenannten Halteelement korrespondierendes Photovoltaikmodul weist wenigstens ein entsprechendes Anschlusselement auf, das bei einer Ausführungsform benachbart zum Rand, beispielsweise zu einer Längs- oder einer Breitseite des Photovoltaikmoduls angeordnet ist oder aber direkt im Rand eines Photovoltaikmoduls, beispielsweise zentrisch bezogen auf eine Seite oder aber in einem Eckbereich. Insbesondere, wenn es vorgesehen ist, ein Anschlusselement in der Nähe des Randes oder einer Ecke anzuordnen, wird dies bevorzugt auf der Unterseite des Photovoltaikmoduls erfolgen.

Mittels der erfindungsgemäßen Halteelemente bzw. der erfindungsgemäßen Photovoltaikmodule kann demnach auf einfache Art und Weise auch ein modulares System aufgebaut werden, umfassend entsprechende Halteelemente und Photovoltaikmodule, die jeweils zueinander korrespondierende Anschlusselemente, z.B. Stecker und/oder Buchsenelemente aufweisen, so dass eine elektrische Verbindung zwischen einem Halteelement und einem Photovoltaikmodul mittels einer insbesondere lösbaren Verbindung zwischen Stecker und Buchse bevorzugt ohne jegliche Kabelverbindung herstellbar ist.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

Mittels eines derartigen modularen Systems können demnach auf einfache Art und Weise unterschiedliche Feldgrößen von Photovoltaikmodulen aufgebaut werden. Hierbei kann es weiterhin vorgesehen, dass ein Halteelement mit einem oder mehreren weiteren Halteelementen mittels eines Stützelementes mechanisch und/oder elektrisch verbunden ist. Hier wird insbesondere durch das Stützelement, welches beispielsweise Teil einer Befestigungsvorrichtung sein kann oder diese insgesamt bildet, sicher gestellt, dass die Halteelemente zum Fassen von Photovoltaikmodulen untereinander einen festen oder in anderer Ausführung zumindest bereichsweise variablen Abstand aufweisen.

Ausführungsbeispiele der Erfindung sind in den nachfolgenden Figuren dargestellt. Es zeigen:
- Figur 1: eine mögliche Ausführung mit Halteelementen zum Fassen von mehreren Photovoltaikmodulen an einer Schmalseite
- Figur 2: die Anordnung eines elektrischen Anschlusselementes an einem Halteelement außerhalb eines Aufnahmebereichs
- Figur 3: die Anordnung eines elektrischen Anschlusselementes in einem Halteelement innerhalb des Aufnahmebereichs
- Figur 4: eine Positionierung der elektrischen Anschlusselemente und Montagerichtung
- Figur 5:: ein Halteelement mit Kabelkanal und Deckelelement
- Figur 6:: die Ausbildung von Modulfeldern
- Figur 7:: ein Halteelement mit zwei Aufnahmenuten und Kabelkanal
- Figur 8+9: Einbaureihenfolgen beim Einsetzen eines Kabelbaumes in einen Kabelkanal

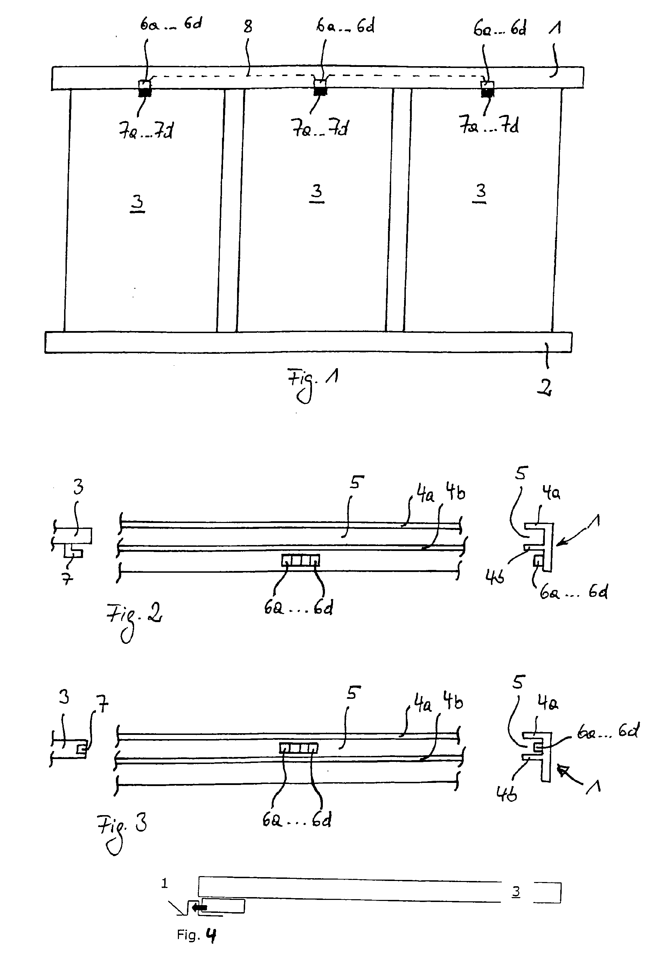

Die Figur 1 zeigt in einer exemplarischen und hier nicht beschränkenden Ansicht die Nebeneinanderanordnung von drei identischen Photovoltaikmodulen 3, die jeweils beispielsweise als Glaslaminataufbau ausgestaltet sind und erfindungsgemäß im oberen Randbereich einen Stecker aufweisen, der ein Anschlusselement 7 mit hier vier Kontaktelementen 7a, 7b, 7c und 7d aufweist. Die hier gezeigten Photovoltaikmodule 3 sind vorgesehen, um in parallel zueinander verlaufenden Halteelementen 1 und 2 an den jeweiligen Schmalseiten aufgenommen zu werden.

Hierbei weist das bezogen auf die Abbildung der Figur 1 obere Halteelement 1 in einem etwas größeren Abstand als die Breite eines Photovoltaikmoduls 3 drei korrespondierende z.B. als Buchsen 6 ausgeführte Anschlusselemente mit vier Kontaktelementen 6a bis 6d auf. Die drei Buchsen 6 sind untereinander mittels in dem Halteelement 1 verlaufenden Leitungen 8, die hier nur schematisch gestrichelt dargestellt sind, verbunden, um je nach Schaltungsanforderung eine Reihenschaltung oder auch eine Parallelschaltung der hier exemplarisch dargestellten drei Photovoltaikmodulen 3 zu erreichen.

Es ist ersichtlich, dass für die mechanische Befestigung der drei Photovoltaikmodule 3 die beiden Halteelemente 1 und 2 parallel zueinander und im festen Abstand durch eine hier nicht gezeigte Stütz- bzw. Unterkonstruktion gehalten werden. Die elektrische Verbindung erfolgt lediglich durch das obere Halteelement 1, welches als länglich ausgestaltetes Profil gebildet sein kann. Das ebenso längliche Profil des Halteelementes 2 kann hier lediglich zur mechanischen Befestigung beitragen.

Die Figuren 2 und 3 zeigen für die Ausführung der Figur 1 zwei unterschiedliche Verbindungsvarianten. Erkennbar ist in der Figur 2 in Aufsicht und Seitenansicht die mögliche Ausgestaltung eines Halteprofils 1 der Figur 1 im Ausschnitt. Ebenfalls dargestellt ist links der Randbereich eines Photovoltaikmoduls 3. Erkennbar ist hier, dass das Halteelement 1 zwei vorstehende Stege bzw. Wandbereiche 4a und 4b aufweist, die mit dem rückwärtigen Bereich des Halteelementes 1 eine Nut 5 ausbilden zur Aufnahme des Randes eines Photovoltaikmoduls 3.

Hierbei kann, wie hier jedoch nicht dargestellt, innerhalb der Nut noch ein elastomeres Element angeordnet sein. Ebenfalls kann es vorgesehen sein, dass einer der Wandbereiche 4a und 4b separat, d.h. nicht einstückig am Halteelement angeordnet ist, beispielsweise um eine Klemmwirkung auf das Photovoltaikmodul im Randbereich zu erreichen, wie dies üblicherweise im Glas- bzw. Fassadenbau bekannt ist. Unterhalb der Nut 5, die durch die Wandbereiche 4a und 4b gebildet wird, ist eine Buchse 6 mit elektrischen Kontaktelementen 6a bis 6d angeordnet.

Erkennbar ist hier in der seitlichen Schnittdarstellung des Photovoltaikmoduls 3, dass im Randbereich unterhalb des Photovoltaikmoduls ein beabstandeter, in Richtung der Buchse 6 vorspringender Stecker 7 angeordnet ist, der eine gleiche Anzahl von Kontaktelementen aufweist. Im vorliegenden Beispiel sind vier Kontakte dargestellt, wobei zwei vorgesehen sind, um ein vorhergehendes Photovoltaikmodul zu kontaktieren und zwei, um ein nachfolgendes Photovoltaikmodul zu kontaktieren. Je nach Schaltungsanforderung können hier unterschiedliche Anzahlen von Kontaktelementen vorgesehen sein. In einer Ausführung, insbesondere bei einer Reihenschaltung kann es ausreichend sein, nur zwei Kontaktelemente vorzusehen.

Die Figur 3 zeigt demgegenüber eine Alternative, bei der die Kontaktelemente 6a bis 6d des Anschlusselements 6 bei der Ausführung mit vier Kontakten bzw. in äquivalenter Form bei auch nur zwei Kontakten innerhalb der Nut 5 angeordnet sind, so dass ein hierzu korrespondierendes Photovoltaikmodul 3 einen entsprechendes Anschlusselement 7, z.B. einen Stecker unmittelbar in seinem Rand aufweist, wie es die Figur 3 linksseitig zeigt.

Bei beiden Ausführungen gemäß Figur 2 und Figur 3 wird beim Einschieben eines Photovoltaikmoduls bzw. dessen Rand in das hier gezeigte Profil 1 automatisch neben einer mechanischen Befestigung im Aufnahmebereich der Nut 1 auch eine elektrische Steckverbindung erzeugt zwischen den Anschlusselemente, d.h. hier dem Stecker 7 und Buchse 6, unabhängig von der Art der Anordnung der Stecker bzw. Buchse im Halteelement.

Bezogen auf die Figur 1 ist hier eine weitere Ausführung möglich, die nicht explizit dargestellt ist, nämlich derart, dass das Halteelement 1 bzw. 2 in drei einzelne Halteelemente unterteilt ist, die jeweils im Abstandsbereich zwischen den Photovoltaikmodulen 3 aufgetrennt sind. An diesen Trennstellen besteht die Möglichkeit, die einzelnen Halteelemente miteinander mechanisch wie auch elektrisch zu kontaktieren, wofür in den entsprechenden Stoßstellen der Halteelemente mechanische und/oder elektrische Verbinder vorgesehen sein können.

Die Figur 4 zeigt eine Montagevariante, bei der die Halteelemente 1 und die Anschlusselemente 6/7 jeweils im Randbereich bezogen auf ein Photovoltaikmodul 3 angeordnet sind. Hierbei zeigt die Figur 4 die Möglichkeit eine elektrische Verbindung durch ein seitliches Einschieben eines Photovoltaikmoduls 3 in ein Halteelement zu erreichen. Die Einschubrichtung liegt somit parallel zur Ebene des Photovoltaikmoduls. Hierbei ist es unerheblich, ob sich das Photovoltaikmodul zu einem ruhenden Halteelement bewegt oder ob sich ein Halteelement zu einem ruhenden Photovoltaikmodul bewegt. Wichtig ist das die relative Bewegung ein Einschieben / Einstecken bewirkt.

Sämtliche Ausführungsformen der hier vorgestellten erfindungsgemäßen Halteelemente bzw. Photovoltaikmodule zeigen den erfindungsgemäßen Vorteil, dass eine elektrische Verbindung mehrerer Photovoltaikmodule untereinander bzw. auch die elektrische Verbindung eines einzelnen Photovoltaikelementes mit einer elektrischen Umgebung vermittels eines oder mehrerer Halteelemente möglich ist, ohne eine separate elektrische Kabelverbindung zwischen diesen aufzubauen. Aufgrund der Steckkontaktierung zwischen Photovoltaikmodul und Halteelement ergibt sich ein besonders robuster und mechanisch wenig anfälliger konstruktiver Aufbau, um Photovoltaikanlagen herzustellen.

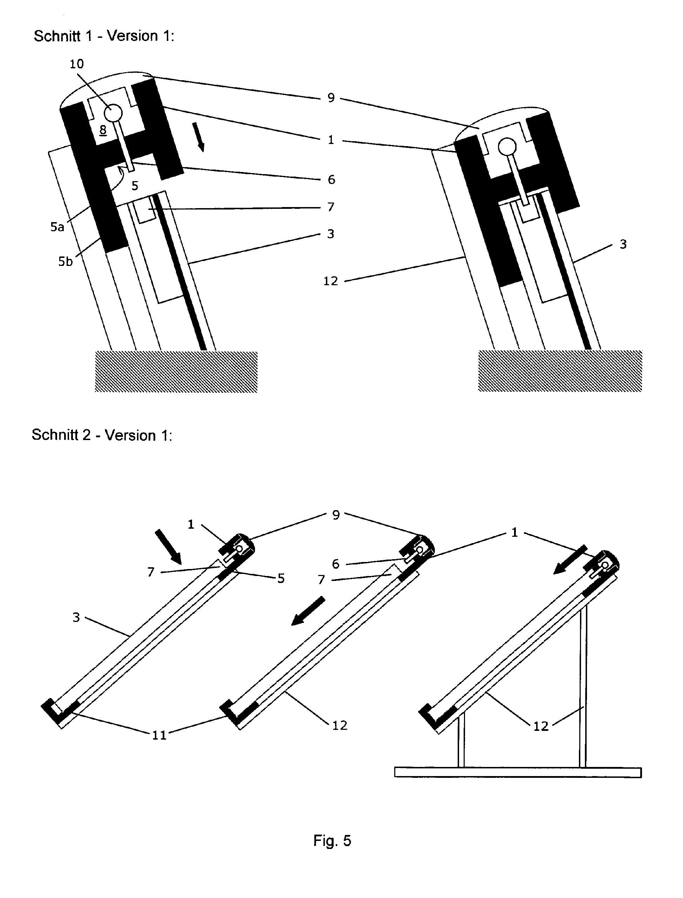

Die Figur 5 zeigt eine Ausführung eines erfindungsgemäßen Halteelementes im Detail und im Überblick. In der oberen Darstellung ist erkennbar, dass ein Halteelement 1 z.B. als ein Profil ausgebildet ist, welches auch als beliebig langes und ablängbares Strangpressprofil z.B. aus Kunststoff oder einem Metall (z.B. Aluminium) hergestellt sein kann. Erkennbar ist hier, dass das Halteelement 1 eine zum Rand eines Photovoltaikmoduls 3 offene Nut 5 aufweist, deren einer Nutschenkel 5b länger ausgebildet ist als der andere, um als Auflage für das Photovoltaikmodul 3 zu dienen, noch bevor die Nut 5 den Rand umfasst.

Parallel zur Nut 5 ist ein Kabelkanal 8 angeordnet, der sich hier bevorzugt über die gesamte Länge der Nut parallel zu dieser erstreckt. Der Kabelkanal ist zu der der Nut gegenüberliegenden Seite offen und kann mit einem Deckelelement 9 verschlossen werden. In den Kabelkanal 8 kann ein Kabelbaum 10 von oben, d.h. der offenen Seite des Kabelkanals 8 eingelegt werden, wobei am Kabelbaum 10 Anschlusselemente 6 angeordnet sind, um den Kontakt zu einem Photovoltaikmodul 3 zu schaffen.

Im Nutgrund 5a, d.h. der Wand, welche die Schenkel der Nut 5 verbindet, sind Ausnehmungen angeordnet, z.B. als Durchgangsbohrungen, so dass Anschlusselemente 6, die hier als Stecker ausgebildet sein können und die am Kabelbaum angeordnet sind durch diese Ausnehmungen in das Innere der Nut hineinragen können. Hierzu werden die Anschlusselemente 6 in die Ausnehmungen im Nutgrund eingesetzt, so dass sie somit z.B. formschlüssig, kraftschlüssig oder stoffschlüssig z.B. durch zusätzliche Verklebung befestigt sind.

In der unteren Übersicht der Figur 5 ist erkennbar, dass ein oberes erfindungsgemäßes Halteelement 1 parallel und in einem Abstand zu einem anderen Halteteil 11 angeordnet ist. Halteelement 1 und Halteteil 11 können z.B. durch eine Befestigungsvorrichtung, eine Aufständerung oder einen sonstigen Unterbau miteinander verbunden sein, wobei es erfindungsgemäß vorgesehen ist, dass Halteelement und Halteteil relativ zueinander verschieblich sind, so dass sich er Abstand zwischen diesen ändern lässt. In der Figur 5 ist das Halteelement 1 verschieblich an der Aufständerung gelagert.

Es kann so zunächst ein Photovoltaikmodul mit dem unteren Rand in eine Aufnahme, z.B. eine Nut des unteren Halteteiles 11 eingelegt werden und mit dem oberen Rand auf die verlängerte Flanke der Nut 5 aufliegen. Sodann kann durch Verschieben des Halteelementes 1 der Abstand zwischen Halteelement 1 und Halteteil 11 verringert werden, wodurch auch die Nut 5 des Halteelementes 1 den oberen Rand des Photovoltaikmoduls 3 umgreift und dieses mechanisch befestigt wird.

Hierbei greift automatisch auch der Stecker des Anschlusselementes 6 in die Buchse des Anschlusselementes 7 am Photovoltaikmodul ein, wodurch dieses kontaktiert wird.

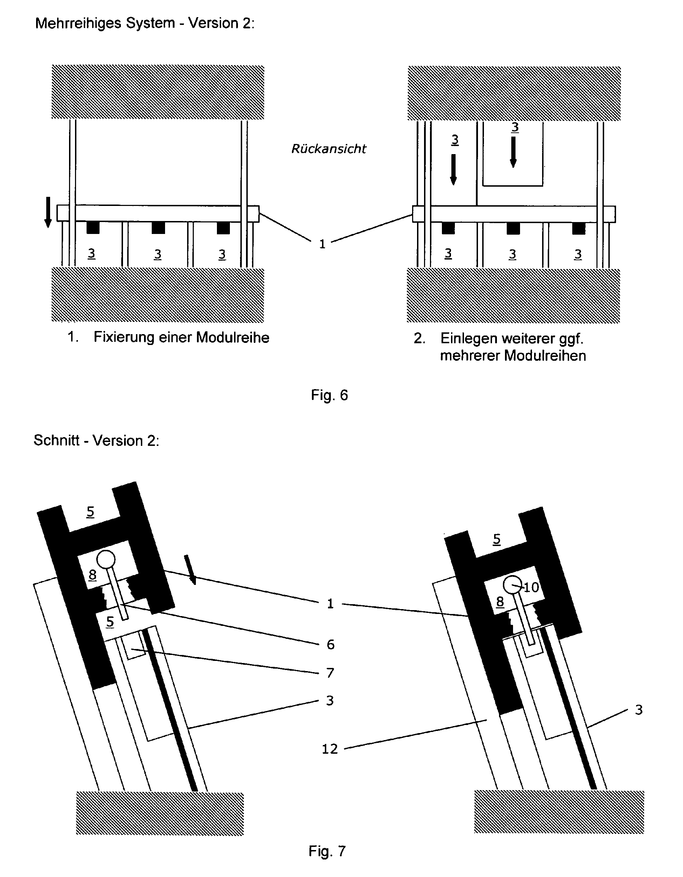

Figur 6 zeigt eine Möglichkeit auch größere Felder von Photovoltaikmodulen 3 herzustellen. In einem hier nicht gezeigten unteren Halteteil werden in diesem Beispiel 3 Photovoltaikmodule eingelegt und durch Verschieben des oberen erfindungsgemäßen Halteelementes 1 sowohl mechanisch fixiert als auch jeweils kontaktiert. Diese Art der Verschiebung ist zu Figur 5 beschrieben worden und gilt hier analog.

Das verschobene Halteelement 1 bietet auf seiner Oberseite eine weitere Aufnahme, z.B. wiederum als Nut, um den unteren Rand einer darüber angeordneten Reihe von Photovoltaikmodulen 3 aufzunehmen. Ein solches Halteelement 1 ist im Detail in der Figur 7 näher beschrieben.

Erkennbar ist in der Figur 7 ein Halteelement 3 bei dem zwei Nuten 5 in demselben Profil zueinander parallel angeordnet sind, wobei die Nuten zu entgegengesetzten Seiten offen sind und zur Aufnahme benachbarter Photovoltaikmodule 3 dienen. Die Nute sind so ausgebildet wie in Figur 5 zum Halteelement 1 und zum Halteteil 11 beschrieben.

Zwischen den Nuten ist ein Kabelkanal 8 angeordnet, der mittels eines durchgehenden Schlitzes in einem Nutgrund mit einer der Nuten 5 verbunden ist, in diesem Fall mit der unteren Nut 5. Daher kann in den ansonsten geschlossenen Kabelkanal 8 von unten durch die Nut 5 ein Kabelbaum 10 eingelegt werden, wobei wiederum die Anschlusselemente 6 des Kabelbaumes wie zuvor beschrieben, nun jedoch im Schlitz statt in den Ausnehmungen befestigt werden. Die Verschiebungskinematik ist ansonsten so wie zu Figur 5 beschrieben. Diese Ausführung des Halteelementes 1 hat den Vorteil, dass der Kabelkanal 10 hermetisch von der Umwelt getrennt ist und der offene Schlitz nach Befestigung eines Randes eines Photovoltaikmoduls 3 ebenso geschlossen wird.

In der Ausführung der Figur 5 kann das Profil des Halteelementes 1 als H-Profil beschrieben werden, wobei bevorzugt ein Schenkel einer der Nuten verlängert ist und im Mittelsteg des H mehrere in Längsrichtung nebeneinander angeordnete Ausnehmungen zur Aufnahme von Anschlusselementen angeordnet sind.

In der Ausführung der Figur 7 kann das Profil als H-Profil, insbesondere wie in Figur 5 bezeichnet werden, wobei der Mittelsteg des H-Profils einen zu einer Nut geschlitzt offenen Kanal aufweist.

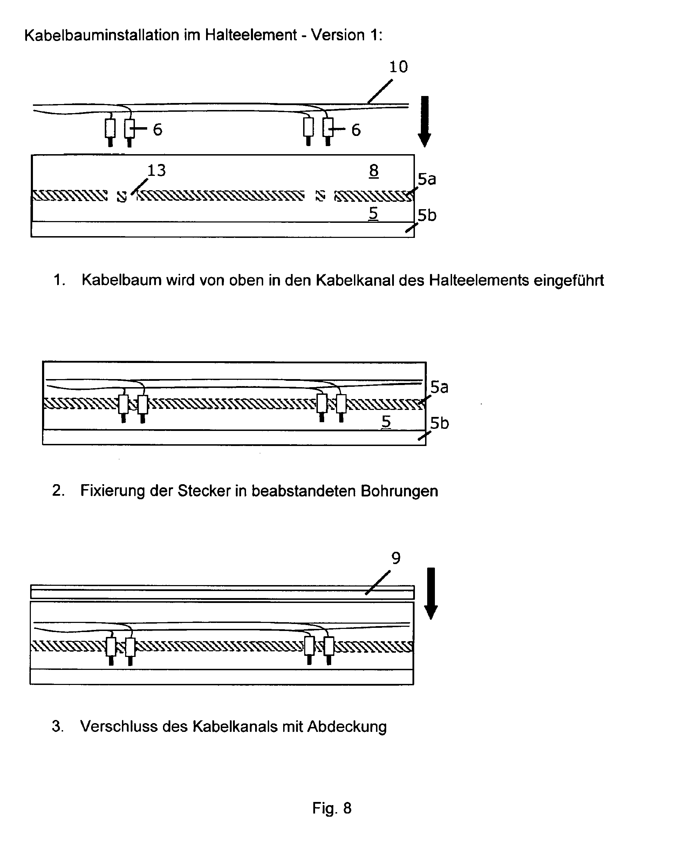

Die Figur 8 verdeutlich die Einbringung eines Kabelbaumes 10 in eine Haltelement 3 gemäß der Figur 5 in einer anderen Schnittdarstellung.

Erkennbar ist hier das der Kabelbaum 10 mit den Anschlusselementen 6 in den nach oben offenen Kabelkanal 8 des Halteelementes eingelegt werden kann. Dabei werden die Anschlusselemente 6 des Kabelbaumes 8 in die Ausnehmungen 13 in dem Nutgrund 5a eingesetzt. Anschließend wird der Deckel 9 aufgesetzt.

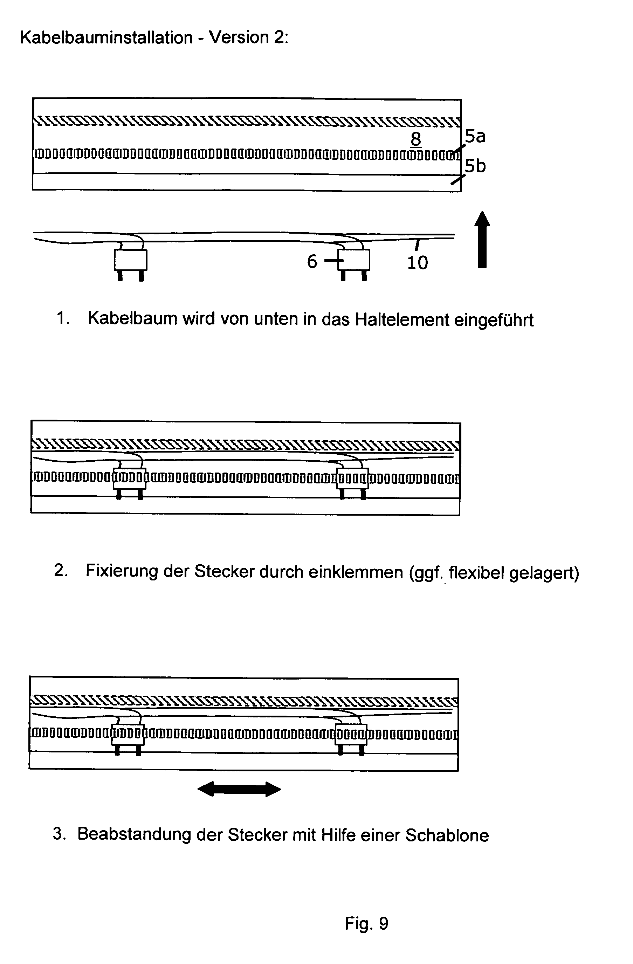

Figur 9 verdeutlich dieselbe Situation bei einem Halteelement nach Figur 7. Hier wird der Kabelbaum 10 durch einen Schlitz im Nutgrund 5a der unteren Nut in den Kabelkanal 8 eingesetzt. Die Anschlusselemente 6 werden im Schlitz befestigt, z.B. klemmend.

Die Anschlusselemente 6 der Figur 9 unterscheiden sich von denen der Figur 8 dadurch dass in Figur 9 ein Anschlusselement 2 Kontaktelemente aufweist, wobei in Figur 8 jedes Anschlusselement 6 nur ein Kontaktelement hat. Jedes Anschlusselement kann dabei eine elastische Lagerung der in ihm angeordneten Kontaktelemente bilden, sowohl in Figur 8 als auch in Figur 9.

In der Figur 9 kann die Beabstandung der Anschlusselemente mit einer Schablone vorgenommen werden. Ebenso kann es vorgesehen sein, dass am oder im Schlitz Markierungen angeordnet sind, oder dass im Schlitz nochmals separate Ausnehmungen angeordnet sind für die Anschlusselemente und der Schlitz nur zum Durchführen des Kabelbaumes dient.

## Patentansprüche

1. Haltelement für Photovoltaikmodule, um wenigstens ein Photovoltaikmodul an einer Befestigungsvorrichtung zu befestigen, **dadurch gekennzeichnet, dass** es wenigstens einen Aufnahmebereich (5) aufweist, um einen Rand wenigstens eines Photovoltaikmoduls (3) zu fassen, wobei wenigstens ein Anschlusselement (6) in oder benachbart zu einem Aufnahmebereich (5) angeordnet ist, das sich bei einem Einschieben und/oder Einstecken eines Photovoltaikmoduls (3) an/in dem Halteelement (1) mit wenigstens einem an einem Photovoltaikmodul (3) angeordneten Anschlusselement (7) elektrisch verbindet.

2. Halteelement nach Anspruch 1, **dadurch gekennzeichnet, dass** mit ihm mehrere Photovoltaikmodule (3) fassbar sind, wobei ein Halteelement (1) mehrere Anschlusselemente (6) aufweist und jeweils wenigstens ein Anschlusselement (6) einem zu fassenden Photovoltaikmodul (3) zugeordnet ist.

3. Halteelement nach Anspruch 2, **dadurch gekennzeichnet, dass** mehrere Anschlusselemente (6) zueinander einen periodischen Abstand aufweisen, insbesondere wobei ein Abstand im Wesentlichen einer Breite und/oder Länge eines Photovoltaikmoduls (3) entspricht.

4. Haltelement nach einem der vorherigen Ansprüche, **dadurch gekennzeichnet, dass** mehrere Halteelemente (1) miteinander, insbesondere steck- und lösbar verbindbar sind, insbesondere wobei die Anschlusselemente (6) der Halteelemente (1) miteinander elektrisch verbindbar sind.

5. Haltelement nach einem der vorherigen Ansprüche, **dadurch gekennzeichnet, dass** eine elektrische Verbindung mehrerer Anschlusselemente (6) miteinander innerhalb eines oder mehrerer verbundenen Halteelemente (1) vorgenommen ist, insbesondere derart, dass die Anschlusselemente (6) elektrisch in Reihe und/oder parallel geschaltet sind.

6. Haltelement nach einem der vorherigen Ansprüche, **dadurch gekennzeichnet, dass** an einem Halteelement (1) eine Schaltvorrichtung vorgesehen ist, mittels der bestimmbar ist, ob Photovoltaikmodule (3) vermittels des Halteelementes (1) elektrisch in Reihe oder parallel geschaltet sind.

7. Haltelement nach einem der vorherigen Ansprüche, **dadurch gekennzeichnet, dass** es mit wenigstens einem anderen Halteelement (1) mittels eines Stützelementes, insbesondere einer Befestigungsvorrichtung (12) mechanisch und/oder elektrisch verbunden ist.

8. Haltelement nach einem der vorherigen Ansprüche, **dadurch gekennzeichnet, dass** es relativ zu einem anderen Halteteil (11), insbesondere einem Halteelement verschieblich angeordnet ist.

9. Halteelement nach Anspruch 8, **dadurch gekennzeichnet, dass** es mittels einer Befestigungsvorrichtung (12) in einem Abstand zu einem Halteteil (11) angeordnet ist, wobei wenigstens das Halteelement (1) oder wenigstens das Halteteil (11) verschieblich ausgebildet ist, so dass der Abstand veränderbar ist.

10. Haltelement nach einem der vorherigen Ansprüche, **dadurch gekennzeichnet, dass** ein Aufnahmebereich als eine Nut (5) ausgebildet ist, wobei parallel zur Nut (5) ein Kabelkanal (8) angeordnet ist, der über wenigstens eine Ausnehmung im Nut-Grund (5a) mit dem Nut-Inneren in Verbindung steht.

11. Halteelement nach Anspruch 10, **dadurch gekennzeichnet, dass** der Kabelkanal (8) durch eine offene mit einem Deckelelement (9) verschließbare Nut ausgebildet ist.

12. Halteelement nach Anspruch 10, **dadurch gekennzeichnet, dass** in eine Ausnehmung wenigstens ein Anschlusselement (6) einsetzbar ist, insbesondere kraft-, form- oder stoffschlüssig.

13. Haltelement nach einem der vorherigen Ansprüche 10 bis 12, **dadurch gekennzeichnet, dass** eine Ausnehmung als ein Schlitz, insbesondere über die gesamte Länge der Nut (5) und/oder des Kabelkanals (8), ausgebildet ist

14. Haltelement nach einem der vorherigen Ansprüche 10 bis 13, **dadurch gekennzeichnet, dass** ein Kontaktelement in einem Anschlusselement (6) und/oder ein Anschlusselement (6) in einer Ausnehmung elastisch gelagert ist.

15. Haltelement nach einem der vorherigen Ansprüche, **dadurch gekennzeichnet, dass** es zwei parallel verlaufende Nute (5) aufweist die zu entgegengesetzten Seiten geöffnet sind, insbesondere wobei zwischen den Nuten (5) ein Kabelkanal (8) angeordnet ist, der über wenigstens eine Ausnehmung im Nut-Grund (5a) mit dem Inneren wenigstens einer der Nuten (5) in Verbindung steht.

16. Photovoltaikmodul, mit wenigstens einem elektrischen Anschlusselement, **dadurch gekennzeichnet, dass** sich das wenigstens eine Anschlusselement (7) bei einem Einschieben und/oder Einstecken des Photovoltaikmoduls (3) an/in einen Aufnahmebereich (5) eines Halteelements (1) mit wenigstens einem in oder benachbart zu dem Aufnahmebereich (5) angeordneten Anschlusselement (6) elektrisch verbindet.

17. Photovoltaikmodul nach Anspruch16, **dadurch gekennzeichnet, dass** ein Anschlusselement (7) im Bereich einer Ecke und/oder des Randes, insbesondere im Rand angeordnet ist.

18. System umfassend wenigstens ein Halteelement und wenigstens ein Photovoltaikmodul, **dadurch gekennzeichnet, dass** es wenigstens ein Halteelement (1) nach einem der Ansprüche 1 bis 15 und wenigstens ein Photovoltaikmodul (3) nach einem der Ansprüche 16 oder 17 umfasst.

19. Verfahren zur elektrischen Kontaktierung wenigstens eines Photovoltaikmodul mit einem Halteelement, **dadurch gekennzeichnet, dass** wenigstens ein Photovoltaikmodul (3) in wenigstens einen Aufnahmebereich (5) wenigstens eines Halteelements (1) eingeschoben und/oder eingesteckt wird, wodurch automatisch eine elektrische und mechanische Verbindung zwischen wenigstens einem Anschlusselement (7) des Photovoltaikmoduls (3) und wenigstens einem in/an oder benachbart zum Aufnahmebereich (5) angeordneten Anschlusselement (6) des wenigstens einen Halteelements (1) entsteht.

20. Verfahren nach Anspruch 19, **dadurch gekennzeichnet, dass** durch Einstecken oder Einschieben mehrerer Photovoltaikmodule (3) in/an wenigstens einem Halteelement (1) eine elektrische Verbindung wenigstens eines Teiles der Photovoltaikmodule (3) untereinander entsteht, insbesondere wobei eine elektrische Leitungsführung innerhalb eines bzw. zwischen mehreren elektrisch verbundenen Halteelementen (1) herbeigeführt wird.
